# EUROPEAN PATENT SPECIFICATION

(11) **EP 4 260 305 B1**
(45) Date of publication and mention of the grant of the patent: **11.02.2026**
(21) Application number: 21904243.9
(22) Date of filing: 07.12.2021
(51) Int. Cl.: G08G 1/01, H04W 12/12, H04L 9/40, G08G 1/04

(54) **DATA INTEGRITY VERIFICATION AND MISBEHAVIOR DETECTION AND REPORTING OF CONNECTED VEHICLES THROUGH SMART INFRASTRUCTURE**
DATENINTEGRITÄTSPRÜFUNG UND FEHLVERHALTENSERKENNUNG UND MELDUNG VON VERBUNDENEN FAHRZEUGEN DURCH INTELLIGENTE INFRASTRUKTUR
VÉRIFICATION D'INTÉGRITÉ DE DONNÉES ET DÉTECTION DE MAUVAIS COMPORTEMENT ET RAPPORT DE VÉHICULES CONNECTÉS PAR L'INTERMÉDIAIRE D'UNE INFRASTRUCTURE INTELLIGENTE

(30) Priority: 10.12.2020 US 202017117484
(43) Date of publication of application: 18.10.2023
(73) Proprietor: Volkswagen Group of America Investments, LLC, Reston, VA 20190 (US)
(72) Inventor: BIALA, Ilan, Pittsburgh, Pennsylvania 15222 (US); LAVERNE, Michel H.J., Pittsburgh, Pennsylvania 15222 (US)
(74) Representative: Hofstetter, Schurack & Partner
(86) International application number: PCT/US2021/062196
(87) International publication number: WO 2022/125541

(56) References cited:
- WO-A1-2019/220162
- KR-A- 20190 134 231
- US-A1- 2018 259 347
- US-A1- 2020 094 847
- US-A1- 2020 111 201
- US-A1- 2020 137 580
- US-A1- 2020 210 623

## Description

### BACKGROUND

As connected vehicles become more common, the utility of smart infrastructure to monitor these connected vehicles becomes essential to ensuring their efficacy. Connected vehicles still have the possibility of latent, degraded functionality that may not be discovered during routine maintenance or may not raise any maintenance warnings to the driver. This may come from faulty behavior that might later be noticed as part of a recall or from damage or defects to a system in the vehicle itself that should be addressed. Additionally, with the advent of connected vehicles, cyber-attacks may become more potent and prevalent, and easily exploited. Currently, the lack of monitoring of these connected vehicles could lead to either undetected/unreported issues that could cause poor vehicle performance and possibly accidents, or system degradation due to overload or incorrect data from malicious vehicles. US 2020/137580 A1 discloses a method for misbehaviour detection in autonomous driving communications. WO 2019/220162 A1 discloses a method for misbehaviour warnings in an intelligent transportation system.

### BRIEF DESCRIPTION OF THE DRAWINGS

The present invention is defined by the independent claims. Advantageous embodiments are described in the dependent claims, the following description and the drawings. The detailed description is set forth with reference to the accompanying drawings. The drawings are provided for purposes of illustration only and merely depict example embodiments of the disclosure. The drawings are provided to facilitate understanding of the disclosure and shall not be deemed to limit the breadth, scope, or applicability of the disclosure. In the drawings, the left-most digit(s) of a reference numeral may identify the drawing in which the reference numeral first appears. The use of the same reference numerals indicates similar, but not necessarily the same or identical components. However, different reference numerals may be used to identify similar components as well. Various embodiments may utilize elements or components other than those illustrated in the drawings, and some elements and/or components may not be present in various embodiments. The use of singular terminology to describe a component or element may, depending on the context, encompass a plural number of such components or elements and vice versa.
FIG. 1 depicts a schematic illustration of an example system, in accordance with one or more example embodiments of the disclosure.
FIG. 2 depicts a schematic illustration of an example system, in accordance with one or more example embodiments of the disclosure.
FIG. 3 depicts an example use case, in accordance with one or more example embodiments of the disclosure.
FIG. 4 depicts an example method, in accordance with one or more example embodiments of the disclosure.
FIG. 5 depicts a schematic illustration of an example computing device architecture, in accordance with one or more example embodiments of the disclosure.

### DETAILED DESCRIPTION

This disclosure relates to, among other things, data integrity verification and misbehavior detection and reporting of connected vehicles through smart infrastructure. Particularly, the systems and methods described herein may involve the use of perception-capable smart nodes (for example, smart infrastructure devices in a smart infrastructure system as described below) that may communicate with connected vehicles to verify data integrity and detect and report incongruent information to either the vehicle from which the information originated, authorities for preventing system degradation or cybersecurity attacks, or both (as well as other connected vehicles in communication with the smart nodes). Smart nodes enabled with this functionality may possess the ability to perform perception tasks and have an understanding of the spatial state and history of vehicles and other actors. Such smart nodes may also possess the ability to communicate with connected vehicles. Smart nodes may receive data from connected vehicles such as their speed, position, heading, etc., and would cross-reference this information with the data ascertained from the local perception functionality. Any differences may be analyzed to determine if the vehicle is likely to be incorrect, and then categorized as either faulty or malicious based on the behavioral pattern of the vehicle. If the vehicle's data is determined to be incorrect and not malicious, then the smart node would report back to the vehicle with the appropriate communication to raise a warning to the driver to have the car inspected and/or serviced. If the vehicle's data is determined to be malicious, then the vehicle could be reported to authorities managing the smart infrastructure or connected vehicles and could blacklist data coming from that vehicle or temporarily disable its connected functionality to prevent smart infrastructure system issues. These same methods may also be applied to actors other than vehicles, such as, for example, pedestrian mobile devices as well (this may apply to any instance in which a vehicle or connected vehicle is described herein).

In some embodiments, smart infrastructure as described herein may refer to any infrastructure that is capable of communicating with devices that are located externally to the infrastructure. Smart infrastructure may describe devices that enable a more intelligent understanding of the physical world and better interactions with the underlying infrastructure. As one example, smart infrastructure may include devices associated with a road intersection, such as traffic cameras, traffic lights, road sensors (for example, sensors that may be used to detect the presence of cars on the road, a temperature of the road, etc.), and the like. As a second example, smart infrastructure may include devices associated with a highway or a highway on ramp. It should be noted that reference may be made herein to road-related types of infrastructure for consistency sake, however, any other type of infrastructure may also be applicable. For example, devices in a power grid, buildings located within a city, or any other infrastructure that is capable of being equipped with processing capabilities that allow communication with external devices. A smart infrastructure system as described herein may refer to a group of devices located within a geographical proximity of one another (for example, a group of devices located within an imaginary geographical boundary). Each device may itself be a smart infrastructure device. For example, a smart infrastructure system may include infrastructure located at a particular road intersection. Continuing this example, the smart infrastructure system at the intersection may include two traffic cameras and two traffic lights. Each of the two traffic cameras and two traffic lights may be smart infrastructure devices. In some cases, the devices included within a smart infrastructure system may form a local communication network or may otherwise be hardwired together to allow for local communications. The devices included within the smart infrastructure system may be configured to serve one or more common purposes, such as managing traffic at the road intersection. In some instances, the smart infrastructure devices that are classified as being included within a particular smart infrastructure system may depend on this common goal, rather than the geographical proximity of the smart infrastructure devices. For example, another smart infrastructure system may include devices associated with a power grid for providing power to residential homes. Once smart infrastructure device may be located at a power plant, and several other smart infrastructure devices may be located in individual residential homes. The distance between such devices may be great in this particular example, but all of the smart infrastructure devices within this example power grid smart infrastructure system may serve the same purpose of ensuring that power is correctly provided to the residential homes.

In some embodiments, the road intersection smart infrastructure system and power grid smart infrastructure system may just two examples of types of smart infrastructure systems, and any number and/or combination of types of smart infrastructure systems may exist in an environment (for example, a city, a state, a region, or any other type of geographical area on either a smaller or larger scale). For example, one particular city may include a number of such smart infrastructure systems that may work together to ensure the functioning of the infrastructure systems found within the city. These multiple smart infrastructure systems may form a network of smart infrastructure systems that may be capable of communicating with one another (or with external devices not included within any smart infrastructure system) through permanent or temporary network connections as may be described below. In some instances, some or all of the smart infrastructure systems may be incapable of directly communicating with other smart infrastructure systems, and may require an intermediary to transmit data between such smart infrastructure systems. For example, a traffic light at an intersection in a rural town may not have the connectivity required to interact with other infrastructure remotely located from the traffic light.

In some embodiments, the term actor as may be used herein may refer to any element that may exist in an environment with the smart infrastructure. In some cases, the term "connected device" may also be used interchangeably with the term "actor" herein. For example, an actor may include a vehicle, a mobile device of a pedestrian, an electric scooter, an unmanned aerial vehicle (UAV), and/or any other element that may exist in an environment around a smart infrastructure system. Some or all of the actors may be capable of communicating with other actors and/or with smart infrastructure. Such communications may be based on any number of communication protocols that may exist. These communication protocols may include network transmission protocols, such as for example, 3G, Long Term Evolution (LTE), LTE-Advanced, 5G, IEEE 802.11, IEEE 802.16, Bluetooth, ZigBee, near-field communication (NFC), and the like. The communication protocols may also include any other number of protocols as well, such as vehicle-to-infrastructure (V2I) communications, vehicle-to-vehicle (V2V) communications, vehicle-to-everything (V2X) communications and the like. For example, some vehicles may perform V2V communications based on the Society of Automotive Engineers (SAE) J2735 standard and some vehicles may perform V2V communications based on the ITS-G5 communication standard (among various other types of communication standards for various types of communications). The communication protocols may also include any other protocols by which actors may perform communications. Additionally, some or all of the actors may also be incapable of any communication with other actors and/or with smart infrastructure. For example, some vehicles may not include the technology to allow them to communicate with other actors and/or with smart infrastructure in this regard (such vehicles may be referred to as "legacy vehicles" herein), such as vehicles included within the level zero categorization of the Society of Automotive Engineers (SAE) six level autonomous vehicle classification system.

In some embodiments, and as described above, connected vehicles have the possibility of latent, degraded functionality that may not be discovered during routine maintenance or may not raise any maintenance warnings to the driver. This may come from faulty behavior that might later be noticed as part of a recall or from damage or defects to a system in the vehicle itself that should be addressed. Additionally, with the advent of connected vehicles, cyber-attacks may become more potent and prevalent, and easily exploited. Currently, the lack of monitoring of these connected vehicles could lead to either undetected/unreported issues that could cause poor vehicle performance and possibly accidents, or system degradation due to overload or incorrect data from malicious vehicles.

The systems and methods described herein may serve to mitigate or eliminate these problems that may arise in an ecosystem that includes such connected vehicles (and other types of actors). This may be accomplished by comparing information received directly from a connected vehicle (for example, through V2X communications or any other communication methods described herein) to information obtained by one or more smart infrastructure devices through their own local perception methods. If a determination is made that a difference exists between the information received from the connected vehicle and the information obtained by the one or more smart infrastructure devices through local perception methods, then it may be determined that either a device in the connected vehicle that sent the information may be malfunctioning and causing incorrect data to be obtained by the vehicle, or the connected vehicle may be a malicious actor that is intentionally providing false information to the smart infrastructure. Another malicious actor scenario may involve one connected vehicle sending spoofed information that appears to relate to another connected vehicle.

In some embodiments, the local perception methods mentioned above may include any methods by which the smart infrastructure may capture information about the connected vehicles without having to receive the information directly from the connected vehicles through communications by the connected vehicles. For example, the smart infrastructure may be configured to capture one or more images, videos, and/or real-time video feeds of an environment external to the smart infrastructure that may include the connected vehicles. Such images, videos, and/or real-time video feeds may be captured by the same smart infrastructure device that is receiving information through communications from the connected vehicles, or may be captured by any other smart infrastructure device in the smart infrastructure system as well. As one non-limiting example, a particular smart infrastructure system may include a traffic camera that may be used to capture the one or more images, videos, and/or real-time video feeds. In this particular example local perception method, the one or more images, videos, and/or real-time video feeds may be analyzed (for example, using computer vision or any other pertinent method) to ascertain information about the connected vehicles. This analysis may be used to obtain the same or similar information that may be provided to the smart infrastructure through communications by connected vehicles. For example, a connected vehicle may provide velocity and heading information to the smart infrastructure, and the smart infrastructure may be able to analyze the one or more images, videos, and/or real-time video feeds to determine the velocity and heading information for the connected vehicle that provided the same type of information through the communication. In some cases, the types of information that are obtained through the local perception methods may be based on the types of information provided by the connected vehicle through communications. That is, the analysis may be performed to obtain the same type of information provided by the connected vehicle such that the comparison may be performed to determine the validity of the information provided by the connected vehicle. However, in other cases, the analysis may be used to determine any other types of information, including information not provided by the connected vehicle through communications.

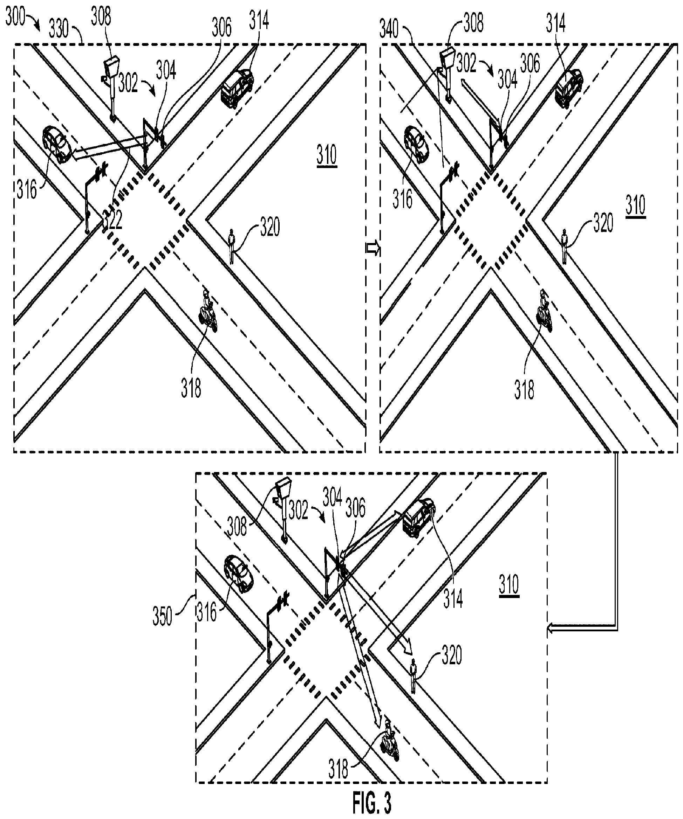

While capturing one or more images, videos, and/or real-time video feeds may be one example of a local perception method performed by the smart infrastructure, the local perception methods may also include any other methods by which the smart infrastructure may be able to determine information about the connected vehicles. Additionally, in some cases, the smart infrastructure may leverage information from other actors in the environment. For example, the smart infrastructure may request that a second connected vehicle obtain information about the connected vehicle that is providing the information to the smart infrastructure. In some cases, the smart infrastructure may not need to request the information from the second connected vehicle, but rather the second connected vehicle (as well as some or all of the other connected vehicles in the environment) may already be providing information to the smart infrastructure, and the smart infrastructure may simply filter information that pertains to the connected vehicle. The second connected vehicle may obtain this information through similar methods as the smart infrastructure. For example, the second connected vehicle may request the information from the connected vehicle through a communication to the connected vehicle. The second connected vehicle may also obtain the information by using its own local perception methods (for example, using various types of sensors on the second vehicle). The second connected vehicle may then analyze the data it received using its local perception methods to obtain the information associated with the connected vehicle, and may provide this information to the smart infrastructure. In some cases, the second connected vehicle may simply capture raw data and transmit it to the smart infrastructure (or another location, such as a remote server) for processing. As one non-limiting example, the second connected vehicle may capture one or more images, videos, or real-time video feeds of the connected vehicle and may simply provide the one or more images, videos, or real-time video feeds to the smart infrastructure or another remote device for processing, rather than analyzing the one or more images, videos, or real-time video feeds to determine the information associated with the connected vehicle. It should be noted that although it is described that connected vehicles may be leveraged to obtain the information, any other type of actor may also provide the information (for example, an electric scooter, a pedestrian mobile device, etc.). This process of leveraging information from other actors may be illustrated in FIG. 3 described below.

In some embodiments, once the information is received from the connected vehicle and information is also obtained through local perception methods of the smart infrastructure as well, the information may be compared to determine if any differences exist. As one particular non-limiting example, a connected vehicle may communicate information about its current speed to the smart infrastructure. The smart infrastructure may then use local perception methods to ascertain the speed of the connected vehicle on its own. These two speed values may then be compared to determine if a difference exists. If such a difference exists, it may be an indication that either the connected vehicle includes a device that is malfunctioning (for example, an electronic control unit (ECU) of the vehicle or a sensor used in determining the speed of the vehicle) or that the connected vehicle is a malicious actor that is providing incorrect information to the smart infrastructure system. In the cases where it is determined that a device of the connected vehicle is malfunctioning, an indication of such (as well as any data received from the vehicle that may have led to the determination) may be provided to a third party, such as an Original Equipment Manufacturer (OEM) of the vehicle. The OEM may use the information to determine a fix for the malfunctioning device and may alert a user of the connected vehicle of the required fix. The OEM may also use the information for other purposes, such as assisting the OEM in identifying a problem that may exist in a particular model of vehicle (for example, if multiple of the same model of vehicle are determined to have such malfunctioning devices). In some cases the existence of a difference may also be an indication that the information is not actually being provided by the connected vehicle, but may rather be provided by a second connected vehicle that is a malicious actor that is providing spoofed information about other connected vehicles to the smart infrastructure.

In some embodiments, the smart infrastructure may simply determine whether a difference between the information exists and take corresponding action based on the mere fact that the difference exists. However, in some cases, the smart infrastructure may perform an additional level of analysis to determine whether the connected vehicle is likely a malicious actor or merely has a malfunctioning device. As one non-limiting example, the smart infrastructure may analyze the data received from the connected vehicle for known exploits, such as direct denial of service (DDSO), spoofing, replay attacks, among other types of exploits.

In some embodiments, regardless of whether the connected vehicle is determined to be a malicious actor, the smart infrastructure may take one or more different types of actions in response to a determination that a different exists between information received from a connected vehicle and the information gleamed through local perception methods of the smart infrastructure system (or information leveraged from other actors in the environment). A first example of such an action may include flagging the connected vehicle as being a source of erroneous information. Flagging the connected vehicle as being a source of erroneous data may include storing a record indicating that the connected vehicle has provided erroneous data. In some cases, the record may include the specific type of data that was determined to be erroneous. In some cases, the record may simply indicate that erroneous data was received in general. A second example of such an action may include providing an indication of the erroneous data to one or more other connected vehicles (or other types of actors) in the environment. This information may be beneficial to the other connected vehicles in the environment because the other connected vehicles may use this information to determine how to navigate the environment. For example, if the connected vehicles are autonomous vehicles, and one of the connected vehicles is either malfunctioning or providing malicious information, then the other connected vehicles may need to adjust their operation to account for this. The other connected vehicles may also adjust how they communicate with the connected vehicle providing the erroneous data. For example, the other connected vehicles may disregard data received by the connected vehicle. The other connected vehicles may disregard this data until an indication is provided that the connected vehicle is no longer providing erroneous data. In some cases, the other connected vehicles may make this determination themselves as well without having to rely on the smart infrastructure.

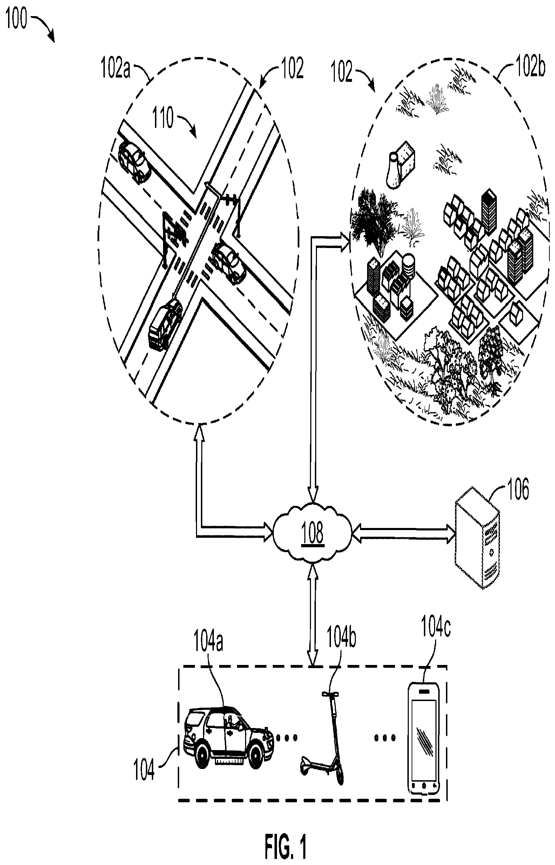

A third example of such an action may include filtering subsequent communications received from the connected vehicle by the smart infrastructure. In some cases, filtering communications may simply refer to blocking any type of information received from the connected vehicle. That is, the connected vehicle may be "blacklisted" to avoid incorrect information about the connected vehicle from being processed by the smart infrastructure. In some cases, only a particular type of information may be ignored by the smart infrastructure. For example, if the smart infrastructure determines that the speed provided by the connected vehicle is different than a speed determined through local perception methods, but heading information provided by the connected vehicle is within an acceptable threshold difference from the information determined by local perception methods, then the smart infrastructure may filter out subsequent speed information provided by the connected vehicle, but may allow receipt and processing of heading information. The extent of filtering performed by the smart infrastructure may depend on whether the connected vehicle is determined to include a malfunctioning device or determined to be a malicious actor. For example, if the vehicle is determined to be a malicious actor, then all information received from the connected vehicle may be ignored (for example, the vehicle may be "blacklisted" in this case as described above). However, if the vehicle is merely determined to have a malfunctioning device, then only the information produced by that device may be ignored. However, in some cases, the extent of the filtering may be performed independently of whether the connected vehicle is a malicious actor or simply has a malfunctioning device as well. Additionally, in some cases, information received from the connected vehicle may not necessarily be permanently filtered. Rather, the smart infrastructure may periodically obtain information from the connected vehicle and perform the comparison described above to identify if the information from the connected vehicle becomes more accurate. Turning to the figures, FIG. 1 illustrates an example system 100, in accordance with one or more embodiments of this disclosure. The system 100 may illustrative a more generalized depiction of example smart infrastructure as may be described herein. In some embodiments, the system 100 may include one or smarter infrastructure systems 102 (for example, smart infrastructure system 102, smart infrastructure system 102b, or any number of smart infrastructure systems). The system 100 may also include one or more actors 104 (for example, actor 104a, actor 104b, actor 104c, or any number of actors) and a remote device 106. In some instances, any of the smart infrastructure systems 102, actors 104, and/or the remote device 106 may communicate over a communications network 108.

In some embodiments, the communications network 108 may include any one or a combination of multiple different types of networks, such as cable networks, the Internet, wireless networks, and other private and/or public networks. In some instances, the communications network 108 may include cellular, Wi-Fi, or Wi-Fi direct. In some embodiments, the network may involve communications between vehicles in the network and/or between vehicles in the network and elements external to the network. For example, Vehicle-to-Vehicle (V2V), Vehicle-to-Infrastructure (V2I), Vehicle-to-Everything (V2X), and/or Dedicated Short Range Communications (DSRC), to name a few, may be used. The communications network 108 may also be a peer-to-peer network. A peer-to-peer network may be a network of interconnected "nodes" that are capable of transferring data directly between one another rather than sending and receiving data to other nodes using a centralized device, such as a server, as an intermediary. With respect to the smart infrastructure systems described herein, the nodes may include individual devices within any of the smart infrastructure systems existing on the network. In some cases, the nodes may also include the smart infrastructure systems as a whole, or even groups of multiple smart infrastructure systems. The nodes may also include entities beyond the smart infrastructure systems. For example, the nodes may include any other entity that may be used to send and/or receive data to and from any devices in a smart infrastructure system. As described above, some examples of such entities may include autonomous or non-autonomous vehicles, electric scooters, mobile devices, such as smart phones, etc. In some instances, the peer-to-peer networks may also be ad-hoc networks. An ad-hoc network may be a temporary network that may be established to allow data transfer to take place directly between two nodes as described above. The ad-hoc network may thus be formed to allow the peer-to-peer data transfers to take place and once the data transfer takes place, may be ended. Thus, the communications network 108 may be temporary in some cases and permanent in other cases. The communications network 108 may also simultaneously include both temporary and permanent connections as well. For example, a connection between the remote device 106 and smart infrastructure systems 102 may be a permanent network connection and a connection between the actors 104 and the smart infrastructure systems may be temporary. These however, are merely examples, and any of the network connections between any elements described in this system 100 may either be temporary and/or permanent.

In some embodiments, the smart infrastructure systems 102 may refer to any infrastructure that is capable of communicating with components that are located externally to the infrastructure. Smart infrastructure may describe devices that enable a more intelligent understanding of the physical world and better interactions with the underlying infrastructure. A single smart infrastructure system 102 may comprise one or smarter infrastructure devices included within a given geographical region. In some instances, the smart infrastructure devices that are included within the smart infrastructure system 102 may serve a common goal (for example, managing traffic at a road intersection, as described in the example smart infrastructure 102a). Smart infrastructure systems 102a and 102b depict two examples of such smart infrastructure systems 102. For example, smart infrastructure system 102a may depict smart infrastructure located at a road intersection 110. The example smart infrastructure system 102a may be used to manage traffic at the road intersection 110. To this end, the smart infrastructure system 102a may include several smart infrastructure devices used to assist in managing the traffic at the road intersection 110. For example, such smart infrastructure devices may include a first traffic light, a second traffic light, a third traffic light, and a fourth traffic light. That is, the smart infrastructure system 102a as a whole may comprise a grouping of smart infrastructure devices several traffic lights. The smart infrastructure system 102a and the devices included within the smart infrastructure system 102a may be defined by a geographical region, such as the road intersection 110 in this case. However, smart infrastructure systems 102 and the devices they include may be defined in any other number of ways. For example, a smart infrastructure system may include a group of smart infrastructure devices that serve a common purpose (for example, managing a traffic intersection). A second example smart infrastructure system 102b may include smart infrastructure devices 112 used to assist in the distribution of power from a power plant to residential homes. For example, the smart infrastructure system 102b may include a management device, such as a remote device at a power plant, one or more line-monitoring devices, and/or one or more residential home monitoring devices. These smart infrastructure systems 102a and 102b are merely examples of types of smart infrastructure systems 102 and any other type of smart infrastructure may be applicable as well.

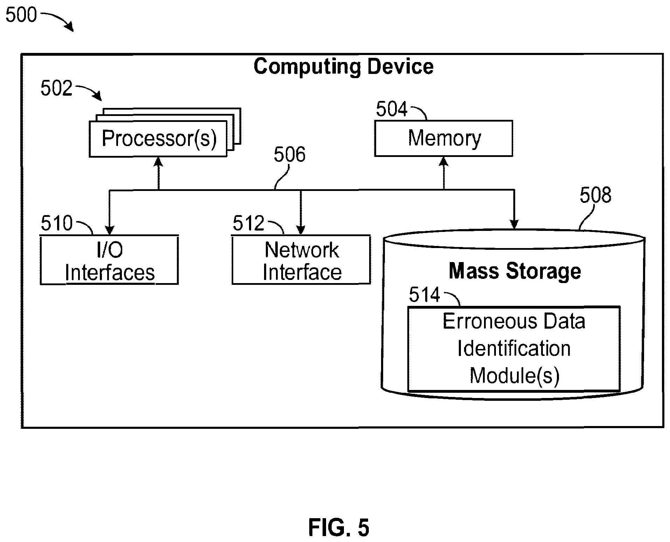

In some embodiments, actors 104 (for example, actor 104a, actor 104b, actor 104c, or any number of actors) may include any entity that is generally capable of moving from one location to another (for example, traversing the geographical region in which a smart infrastructure system 102 is located). As depicted in the figure, actor 104a may be a vehicle, actor 104b may be an electric scooter, and actor 104c may be a mobile phone. To provide further examples, in the context of the example smart infrastructure system 102a, actors 104 may include vehicles, bikes, and/or mobile phones. However, these are merely examples of actors, and any other type of entity may be applicable, such as an unmanned aerial vehicle (UAV) drone, for example. In some embodiments, an actor 104 may include memory (as may be described below with respect to the example computing device 500 of FIG. 5) that may be used to store software updates for the smart infrastructure devices that comprise a smart infrastructure system 102. A single actor 104 may be capable of storing a full software update itself, but may also only store a portion of a software update. In some cases, the actor 104 may not locally store the software update, but may instead request the software update from an external source, such as the remote device 106. In such cases, the actor 104 may merely serve as an intermediary between the smart infrastructure system 102 and the external source where the software update is located.

In some embodiments, remote device 106 may be a device such as a remote server that may be used to store information remotely from a smart infrastructure system 102. For example, as described herein, smart infrastructure systems may receive information from various actors 104 that may be formatted for use with different communication protocols. This information may be translated into an agnostic format, which may be stored locally to the smart infrastructure system 102, or may be stored remotely at the remote device 106. The remote device 106 may also be used to perform any of the methods described herein, such that processing (such as data translations to and from the agnostic format, for example) may take place remotely from the smart infrastructure system 102 as well.

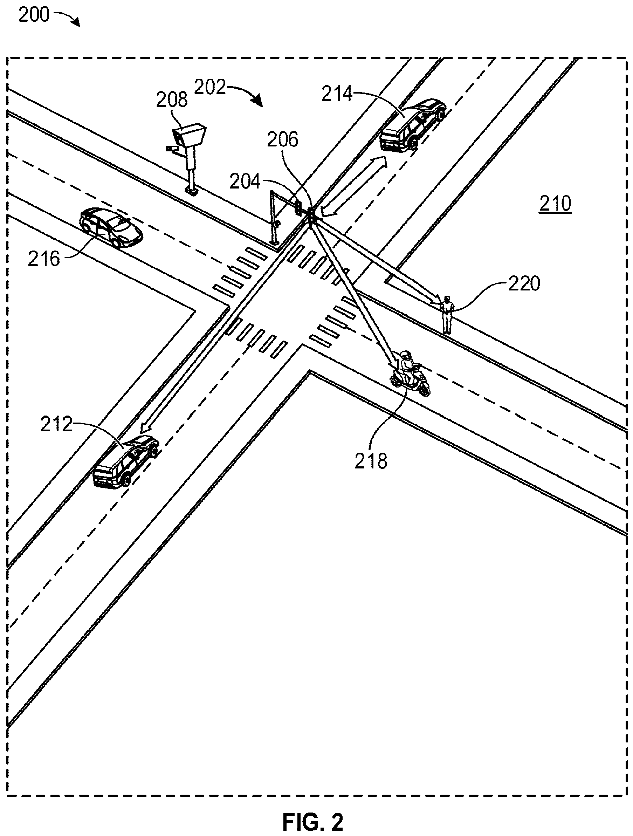

FIG. 2 illustrates an example system 200, in accordance with one or more embodiments of this disclosure. The system 200 may illustrative a more detailed example of a smart infrastructure system 202 used to employ the multi-modal transfer capabilities as described herein (for example, a smart infrastructure system that may serve as an intermediary between actors that may perform communications using different communication protocols). In some embodiments, the smart infrastructure system 202 may include one or smarter infrastructure devices (for example, traffic light 204, traffic light 206, roadside camera 208, and/or any other number and type of smart infrastructure devices). The one or more smart infrastructure devices may exist in an environment 210 with one or more actors (for example, connected vehicle 212, connected vehicle 214, legacy vehicle 216, electric scooter 218, pedestrian mobile device 220, or any number of actors). As described above, some or all of the actors may be capable of communicating with other actors and/or with smart infrastructure 202 (for example, the connected vehicle 212, connected vehicle 214, electric scooter 218, and pedestrian mobile device 220). Such communications may be based on any number of communication protocols that may exist. These communication protocols may include network transmission protocols, such as for example, 3G, Long Term Evolution (LTE), LTE-Advanced, 5G, IEEE 802.11, IEEE 802.16, Bluetooth, ZigBee, near-field communication (NFC), and the like. The communication protocols may also include any other number of protocols as well, such as vehicle-to-infrastructure (V2I) communications, vehicle-to-vehicle (V2V) communications, and the like. , vehicle-to-everything (V2X) communications and the like. For example, some vehicles may perform V2V communications based on the Society of Automotive Engineers (SAE) J2735 standard and some vehicles may perform V2V communications based on the ITS-G5 communication standard (among various other types of communication standards for various types of communications). The communication protocols may also include any other protocols by which actors may perform communications. Additionally, some or all of the actors may also be incapable of communication with other actors and/or with smart infrastructure (for example, legacy vehicle 216). For example, the legacy vehicle 216 may not include the technology to allow them to communicate with other actors and/or with smart infrastructure in this regard. For example, legacy vehicle 216 may be a vehicle included within the level zero categorization of the Society of Automotive Engineers (SAE) six level autonomous vehicle classification system.

In some embodiments, the system 200 may serve to mitigate or eliminate problems that may arise in an environment 210 that includes numerous different types of actors with varying degrees of communication capabilities and that may use any number of different types of communication protocols through the use of the smart infrastructure 202 as the intermediary between the various actors in the environment 210. The smart infrastructure 202 may serve as an intermediary between the various actors in a number of different capacities. As one example, the smart infrastructure 202 may be configured to receive information from actors in the environment 210 through any number of communication protocols, translate the information into an agnostic format, store the information into the agnostic format, and then translate the information in the agnostic format into a non-agnostic communication protocol to provide to another actor depending on the communication protocol used by that particular actor. As a second example, the smart infrastructure 202 may not translate the information into the agnostic format, but rather may simply serve as a translation intermediary to translate information between different types of communication protocols to facilitate information sharing between actors that use different types of communication protocols. As a third example, the smart infrastructure 202 may further be configured to capture information about actors in the environment that are not configured to communicate with other actors and/or with the smart infrastructure, such as the legacy vehicle 216, so that information about these legacy actors may also be provided to the other actors in the environment (for example, the connected vehicle 212, connected vehicle 214, electric scooter 218, pedestrian mobile device 220). This may be beneficial because information about these legacy actors may otherwise not be able to be provided to other actors in the environment 210.

FIG. 3 illustrates an example use case 300, in accordance with one or more example embodiments of the disclosure. The use case 300 may be carried out in association with an example system, which may be the same as, or similar to, system 200 depicted in FIG. 2 (as well as any other system described herein). For example, smart infrastructure system 302 may be the same as smart infrastructure system 202, traffic light 304 may be the same as traffic light 204, traffic light 306 may be the same as traffic light 206, roadside camera 308 may be the same as roadside camera 208, connected vehicle 316 may be the same as connected vehicle 212, connected vehicle 314 may be the same as connected vehicle 214, electric scooter 318 may be the same as electric scooter 218, and/or pedestrian mobile device 320 may be the same as pedestrian mobile device 220.

The use case 300 may begin with scene 330 in which various actors in the environment 310 may provide information to a smart infrastructure device of the smart infrastructure system 302. For example, scene 330 may depict connected vehicle 316 sending a communication 322 to traffic light 306. It should be noted that although scene 330 depicts communication 322 being provided to traffic light 306, any communications may similarly be provided to any other number and/or types of smart infrastructure devices in the smart infrastructure system 302 as well (for example, traffic light 304, roadside camera 308, and/or any other types of smart infrastructure devices that may be included in a smart infrastructure system). The communication 322 may include information about the connected vehicle 316, such as heading, velocity, and position information, among any other various types of information.

The use case 300 may continue with scene 340, which may depict a smart infrastructure device performing an example local perception method as described above. In particular, scene 340 may depict roadside camera 308 capturing one or more images, videos, and/or real-time feeds of the environment 310. Although Fig. 3 may depict the roadside camera 308 capturing only the connected vehicle 316, this may only be the case for simplicity of visualization, and the roadside camera 308 may similarly capture any field of view of the environment 310 including any of the actors in the environment. Additionally, any of the smart infrastructure devices may be capturing one or more images, videos, and/or real-time feeds of the environment 310 as well. That is, the roadside camera 308 may be depicted as capturing the one or more images, videos, and/or real-time feeds for exemplification purpose. These one or more images, videos, and/or real-time feeds may be captured periodically or continuously in real-time.

While capturing one or more images, videos, and/or real-time video feeds may be one example of a local perception method performed by the smart infrastructure, the local perception methods may also include any other methods by which the smart infrastructure system 302 may be able to determine information about the connected vehicles. Additionally, in some cases, the smart infrastructure may leverage information from other actors in the environment. For example, the smart infrastructure system 302 may request that connected vehicle 314 obtain information about connected vehicle 316. In some cases, the smart infrastructure system 302 may not need to request the information from the connected vehicle 314, but rather the connected vehicle 314 (as well as some or all of the other connected vehicles or other actors in the environment) may already be providing information to the smart infrastructure system 302, and the smart infrastructure system 302 may simply filter information that pertains to the connected vehicle 316. The connected vehicle 314 may obtain this information through similar methods as the smart infrastructure system 302. For example, the connected vehicle 314 may request the information from the connected vehicle 316 through a communication to the connected vehicle 316. The connected vehicle 314 may also obtain the information by using its own local perception methods (for example, using various types of sensors on the connected vehicle 314). The connected vehicle 314 may then analyze the data it received using its local perception methods to obtain the information associated with the connected vehicle 316, and may provide this information to the smart infrastructure system 302. In some cases, the connected vehicle 314 may simply capture raw data and transmit it to the smart infrastructure system 302 (or another location, such as a remote server) for processing. As one non-limiting example, the connected vehicle 314 may capture one or more images, videos, or real-time video feeds of the connected vehicle 316 and may simply provide the one or more images, videos, or real-time video feeds to the smart infrastructure system 302 or another remote device for processing, rather than analyzing the one or more images, videos, or real-time video feeds to determine the information associated with the connected vehicle 316.

In some embodiments, once the information is received from the connected vehicle 316 through communication 322 and information is also obtained through local perception methods of the smart infrastructure system 302 as well, the information may be compared to determine if any differences exist. As one particular non-limiting example, a connected vehicle 316 may communicate information about its current speed to the smart infrastructure system 302. The smart infrastructure system 302 may then use local perception methods to ascertain the speed of the connected vehicle 316 on its own. These two speed values may then be compared to determine if a difference exists. If such a difference exists, it may be an indication that either the connected vehicle 316 includes a device that is malfunctioning (for example, an electronic control unit (ECU) of the vehicle or a sensor used in determining the speed of the vehicle) or that the connected vehicle 316 is a malicious actor that is providing incorrect information to the smart infrastructure system 302. In some cases the existence of a difference may also be an indication that the information is not actually being provided by the connected vehicle 316, but may rather be provided by a second actor (for example, connected vehicle 314) that is a malicious actor that is providing spoofed information about other connected vehicles to the smart infrastructure.

In some embodiments, the smart infrastructure system 302 may take one or more different types of actions in response to a determination that a different exists between information received from the connected vehicle 316 and the information gleamed through local perception methods of the smart infrastructure system 302 (or information leveraged from other actors in the environment). A first example of such an action may include flagging the connected vehicle 316 as being a source of erroneous information. Flagged the connected vehicle 316 as being a source of erroneous data may include storing a recording indicating that the connected vehicle 316 has provided erroneous data. In some cases, the record may include the specific type of data that was determined to be erroneous. In some cases, the record may simply indicate that erroneous data was received in general. A second example of such an action may include providing an indication of the erroneous data to one or more other connected vehicles (or other types of actors) in the environment, which may be shown in scene 350. For example, the indication may be shown as being provided to connected vehicle 314, pedestrian mobile device 320, and scooter 318. This information may be beneficial to the other connected actors in the environment because the other connected vehicles may use this information to determine how to navigate the environment. For example, if an actor is an autonomous vehicle, and the connected vehicle 316 is either malfunctioning or providing malicious information, then the other connected vehicles may need to adjust their operation to account for this. The other connected vehicles may also adjust how they communicate with the connected vehicle 316 providing the erroneous data. For example, the other actors may disregard data received by the connected vehicle 316. The other actors may disregard this data until an indication is provided that the connected vehicle is no longer providing erroneous data. In some cases, the other actors may make this determination themselves as well without having to rely on the smart infrastructure.

A third example of such an action may include filtering subsequent communications received from the connected vehicle 316 by the smart infrastructure system 302. In some cases, filtering communications may simply refer to blocking any type of information received from the connected vehicle 316. That is, the connected vehicle may be "blacklisted" to avoid incorrect information about the connected vehicle from being processed by the smart infrastructure system 302. In some cases, only a particular type of information may be ignored by the smart infrastructure system 302. For example, if the smart infrastructure system 302 determines that the speed provided by the connected vehicle 316 is different than a speed determined through local perception methods, but heading information provided by the connected vehicle 316 is within an acceptable threshold difference from the information determined by local perception methods, then the smart infrastructure system 302 may filter out subsequent speed information provided by the connected vehicle 316, but may allow receipt and processing of heading information. The extent of filtering performed by the smart infrastructure may depend on whether the connected vehicle 316 is determined to include a malfunctioning device or determined to be a malicious actor. For example, if the connected vehicle 316 is determined to be a malicious actor, then all information received from the connected vehicle 316 may be ignored (for example, the vehicle may be "blacklisted" in this case as described above). However, if the connected vehicle 316 is merely determined to have a malfunctioning device, then only the information produced by that device of the connected vehicle 316 may be ignored. However, in some cases, the extent of the filtering may be performed independently of whether the connected vehicle is a malicious actor or simply has a malfunctioning device as well. Additionally, in some cases, information received from the connected vehicle may not necessarily be permanently filtered. Rather, the smart infrastructure system 302 may periodically obtain information from the connected vehicle 316 and perform the comparison described above to identify if the information from the connected vehicle 316 becomes more accurate.

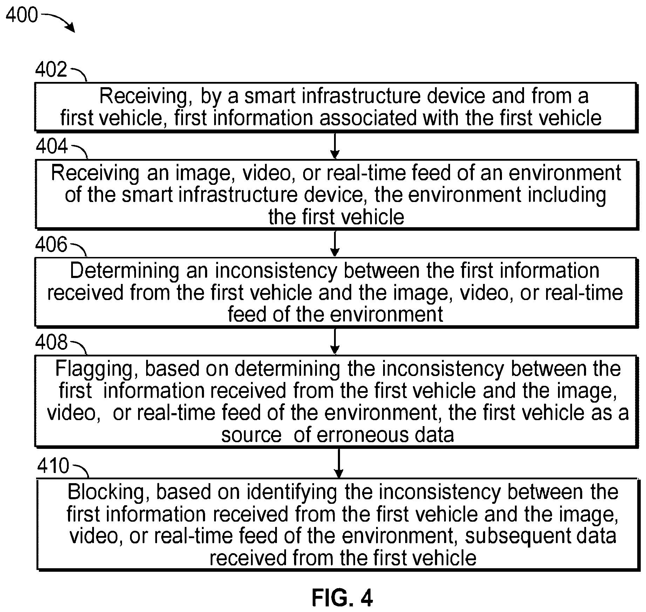

FIG. 4 is an example method 400. At block 402 of the method 400 in FIG. 4, the method may include receiving, by a smart infrastructure device and from a first vehicle, first information associated with the first vehicle. Block 404 of the method 400 may include receiving an image, video, or real-time feed of an environment of the smart infrastructure device, the environment including the first vehicle. Block 406 of the method may include determining an inconsistency between the first information received from the first vehicle and the image, video, or real-time feed of the environment. Block 408 of the method may include flagging, based on determining the inconsistency between the first information received from the first vehicle and the image, video, or real-time feed of the environment, the first vehicle as a source of erroneous data. Block 410 may include blocking, based on identifying the inconsistency between the first information received from the first vehicle and the image, video, or real-time feed of the environment, subsequent data received from the first vehicle.

The operations described and depicted in the illustrative process flow of FIG. 4 may be carried out or performed in any suitable order as desired in various example embodiments of the disclosure. Additionally, in certain example embodiments, at least a portion of the operations may be carried out in parallel. Furthermore, in certain example embodiments, less, more, or different operations than those depicted in FIG. 4 may be performed.

FIG. 5 illustrates an example computing device 500, in accordance with one or more embodiments of this disclosure. The computing device 500 may be representative of any number of elements described herein, such as any of the smart infrastructure systems 102, the actors 104, the remote device 106, or any other element described herein. The computing device 500 may include at least one processor 502 that executes instructions that are stored in one or more memory devices (referred to as memory 504). The instructions can be, for instance, instructions for implementing functionality described as being carried out by one or more modules and systems disclosed above or instructions for implementing one or more of the methods disclosed above. The processor(s) 502 can be embodied in, for example, a CPU, multiple CPUs, a GPU, multiple GPUs, a TPU, multiple TPUs, a multi-core processor, a combination thereof, and the like. In some embodiments, the processor(s) 502 can be arranged in a single processing device. In other embodiments, the processor(s) 502 can be distributed across two or more processing devices (e.g., multiple CPUs; multiple GPUs; a combination thereof; or the like). A processor can be implemented as a combination of processing circuitry or computing processing units (such as CPUs, GPUs, or a combination of both). Therefore, for the sake of illustration, a processor can refer to a single-core processor; a single processor with software multithread execution capability; a multi-core processor; a multi-core processor with software multithread execution capability; a multi-core processor with hardware multithread technology; a parallel processing (or computing) platform; and parallel computing platforms with distributed shared memory. Additionally, or as another example, a processor can refer to an integrated circuit (IC), an ASIC, a digital signal processor (DSP), an FPGA, a PLC, a complex programmable logic device (CPLD), a discrete gate or transistor logic, discrete hardware components, or any combination thereof designed or otherwise configured (e.g., manufactured) to perform the functions described herein.

The processor(s) 502 can access the memory 504 by means of a communication architecture 506 (e.g., a system bus). The communication architecture 506 may be suitable for the particular arrangement (localized or distributed) and type of the processor(s) 502. In some embodiments, the communication architecture 506 can include one or many bus architectures, such as a memory bus or a memory controller; a peripheral bus; an accelerated graphics port; a processor or local bus; a combination thereof, or the like. As an illustration, such architectures can include an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, a Peripheral Component Interconnect (PCI) bus, a PCI-Express bus, a Personal Computer Memory Card International Association (PCMCIA) bus, a Universal Serial Bus (USB), and/or the like.

Memory components or memory devices disclosed herein can be embodied in either volatile memory or non-volatile memory or can include both volatile and non-volatile memory. In addition, the memory components or memory devices can be removable or non-removable, and/or internal or external to a computing device or component. Examples of various types of non-transitory storage media can include hard-disc drives, zip drives, CD-ROMs, digital versatile disks (DVDs) or other optical storage, magnetic cassettes, magnetic tape, magnetic disk storage or other magnetic storage devices, flash memory cards or other types of memory cards, cartridges, or any other non-transitory media suitable to retain the desired information and which can be accessed by a computing device.

As an illustration, non-volatile memory can include read-only memory (ROM), programmable ROM (PROM), electrically programmable ROM (EPROM), electrically erasable programmable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The disclosed memory devices or memories of the operational or computational environments described herein are intended to include one or more of these and/or any other suitable types of memory. In addition to storing executable instructions, the memory 504 also can retain data.

Each computing device 500 also can include mass storage 508 that is accessible by the processor(s) 502 by means of the communication architecture 506. The mass storage 508 can include machine-accessible instructions (e.g., computer-readable instructions and/or computer-executable instructions). In some embodiments, the machine-accessible instructions may be encoded in the mass storage 508 and can be arranged in components that can be built (e.g., linked and compiled) and retained in computer-executable form in the mass storage 508 or in one or more other machine-accessible non-transitory storage media included in the computing device 500. Such components can embody, or can constitute, one or many of the various modules disclosed herein. Such modules are illustrated as erroneous data identification modules 514. In some instances, the modules may also be included within the memory 504 as well.

Execution of the erroneous data identification modules 514, individually or in combination, by at least one of the processor(s) 502, can cause the computing device 500 to perform any of the operations described herein (for example, the operations described with respect to FIG. 4, as well as any other operations).

Each computing device 500 also can include one or more input/output interface devices 510 (referred to as I/O interface 510) that can permit or otherwise facilitate external devices to communicate with the computing device 500. For instance, the I/O interface 510 may be used to receive and send data and/or instructions from and to an external computing device.

The computing device 500 also includes one or more network interface devices 512 (referred to as network interface(s) 512) that can permit or otherwise facilitate functionally coupling the computing device 500 with one or more external devices. Functionally coupling the computing device 500 to an external device can include establishing a wireline connection or a wireless connection between the computing device 500 and the external device. The network interface devices 512 can include one or many antennas and a communication processing device that can permit wireless communication between the computing device 500 and another external device. For example, between a vehicle and a smart infrastructure system, between two smart infrastructure systems, etc. Such a communication processing device can process data according to defined protocols of one or several radio technologies. The radio technologies can include, for example, 3G, Long Term Evolution (LTE), LTE-Advanced, 5G, IEEE 802.11, IEEE 802.16, Bluetooth, ZigBee, near-field communication (NFC), and the like. The communication processing device can also process data according to other protocols as well, such as vehicle-to-infrastructure (V2I) communications, vehicle-to-vehicle (V2V) communications, and the like. The network interface(s) 512 may also be used to facilitate peer-to-peer ad-hoc network connections as described herein.

As used in this application, the terms "environment," "system," "unit," "module," "architecture," "interface," "component," and the like refer to a computer-related entity or an entity related to an operational apparatus with one or more defined functionalities. The terms "environment," "system," "module," "component," "architecture," "interface," and "unit," can be utilized interchangeably and can be generically referred to functional elements. Such entities may be either hardware, a combination of hardware and software, software, or software in execution. As an example, a module can be embodied in a process running on a processor, a processor, an object, an executable portion of software, a thread of execution, a program, and/or a computing device. As another example, both a software application executing on a computing device and the computing device can embody a module. As yet another example, one or more modules may reside within a process and/or thread of execution. A module may be localized on one computing device or distributed between two or more computing devices. As is disclosed herein, a module can execute from various computer-readable non-transitory storage media having various data structures stored thereon. Modules can communicate via local and/or remote processes in accordance, for example, with a signal (either analogic or digital) having one or more data packets (e.g., data from one component interacting with another component in a local system, distributed system, and/or across a network such as a wide area network with other systems via the signal).

As yet another example, a module can be embodied in or can include an apparatus with a defined functionality provided by mechanical parts operated by electric or electronic circuitry that is controlled by a software application or firmware application executed by a processor. Such a processor can be internal or external to the apparatus and can execute at least part of the software or firmware application. Still, in another example, a module can be embodied in or can include an apparatus that provides defined functionality through electronic components without mechanical parts. The electronic components can include a processor to execute software or firmware that permits or otherwise facilitates, at least in part, the functionality of the electronic components.

In some embodiments, modules can communicate via local and/or remote processes in accordance, for example, with a signal (either analog or digital) having one or more data packets (e.g., data from one component interacting with another component in a local system, distributed system, and/or across a network such as a wide area network with other systems via the signal). In addition, or in other embodiments, modules can communicate or otherwise be coupled via thermal, mechanical, electrical, and/or electromechanical coupling mechanisms (such as conduits, connectors, combinations thereof, or the like). An interface can include input/output (I/O) components as well as associated processors, applications, and/or other programming components.

Further, in the present specification and annexed drawings, terms such as "store," "storage," "data store," "data storage," "memory," "repository," and substantially any other information storage component relevant to the operation and functionality of a component of the disclosure, refer to memory components, entities embodied in one or several memory devices, or components forming a memory device. It is noted that the memory components or memory devices described herein embody or include non-transitory computer storage media that can be readable or otherwise accessible by a computing device. Such media can be implemented in any methods or technology for storage of information, such as machine-accessible instructions (e.g., computer-readable instructions), information structures, program modules, or other information objects.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language generally is not intended to imply that features, elements, and/or operations are in any way required for one or more implementations or that one or more implementations necessarily include logic for deciding, with or without user input or prompting, whether these features, elements, and/or operations are included or are to be performed in any particular implementation.

What has been described herein in the present specification and annexed drawings includes examples of systems, devices, techniques, and computer program products that, individually and in combination, permit the automated provision of an update for a vehicle profile package. It is, of course, not possible to describe every conceivable combination of components and/or methods for purposes of describing the various elements of the disclosure, but it can be recognized that many further combinations and permutations of the disclosed elements are possible. Accordingly, it may be apparent that various modifications can be made to the disclosure without departing from the scope thereof. In addition, or as an alternative, other embodiments of the disclosure may be apparent from consideration of the specification and annexed drawings, and practice of the disclosure as presented herein. It is intended that the examples put forth in the specification and annexed drawings be considered, in all respects, as illustrative and not limiting. Although specific terms are employed herein, they are used in a generic and descriptive sense only and not for purposes of limitation.

## Claims

1. A method (400) comprising:
receiving (402), by a smart infrastructure device (204, 206, 208) of a smart infrastructure system (102, 102b, 202, 302) and from a first vehicle (212, 214, 216, 314, 316) that is located externally from the smart infrastructure device (204, 206, 208), first information associated with the first vehicle (212, 214, 216, 314, 316);
receiving (404) an image, video, or real-time feed of an environment (210, 310) of the smart infrastructure device (204, 206, 208), the environment (210, 310) including the first vehicle (212, 214, 216, 314, 316);
determining (406) an inconsistency between the first information received from the first vehicle (212, 214, 216, 314, 316) and the image, video, or real-time feed of the environment (210, 310);
flagging (408), based on determining the inconsistency between the first information received from the first vehicle (212, 214, 216, 314, 316) and the image, video, or real-time feed of the environment (210, 310), the first vehicle (212, 214, 216, 314, 316) as a source of erroneous data; and
based on determining the inconsistency between the first information received from the first vehicle (212, 214, 216, 314, 316) and the image, video, or real-time feed of the environment (210, 310), by the smart infrastructure system (102, 102b, 202, 302)
identifying a type of the information for which the inconsistency has been determined,
filtering out subsequent data of the identified type from the first vehicle (212, 214, 216, 314, 316), and
continuing to receive and use subsequent data that is not of the identified type from the first vehicle (212, 214, 216, 314, 316).

2. The method (400) of claim 1, further comprising:
determining, based on determining the inconsistency between the first information received from the first vehicle (212, 214, 216, 314, 316) and the image, video, or real-time feed of the environment (210, 310), that the first vehicle (212, 214, 216, 314, 316) is providing false information to the smart infrastructure device (204, 206, 208).

3. The method (400) of claim 1 or 2, further comprising:
determining, based on determining the inconsistency between the first information received from the first vehicle (212, 214, 216, 314, 316) and the image, video, or real-time feed of the environment (210, 310), that the first vehicle (212, 214, 216, 314, 316) has a malfunctioning device.

4. The method (400) of claim 3, further comprising:
sending, based on determining that the first vehicle (212, 214, 216, 314, 316) has a malfunctioning device, an indication of the malfunctioning device to the first vehicle (212, 214, 216, 314, 316) or to a third party device.

5. The method (400) of any of the preceding claims, further comprising:
sending, by the smart infrastructure device (204, 206, 208), an indication of the inconsistency to one or more other vehicles.

6. The method (400) of any of the preceding claims, wherein the first information comprises at least one of: a velocity of the first vehicle (212, 214, 216, 314, 316), a direction of the first vehicle (212, 214, 216, 314, 316), or a location of the first vehicle (212, 214, 216, 314, 316).

7. A system (100, 200) comprising a smart infrastructure device (204, 206, 208), and a smart infrastructure system, the system configured to:
receive (402), by the smart infrastructure device (204, 206, 208) of the smart infrastructure system (102, 102b, 202, 302) and from a first vehicle (212, 214, 216, 314, 316) that is located externally from the smart infrastructure device (204, 206, 208), first information associated with the first vehicle (212, 214, 216, 314, 316);
receive (404) an image, video, or real-time feed of an environment (210, 310) of the smart infrastructure device (204, 206, 208), the environment (210, 310) including the first vehicle (212, 214, 216, 314, 316);
determine (406) an inconsistency between the first information received from the first vehicle (212, 214, 216, 314, 316) and the image, video, or real-time feed of the environment (210, 310);
flag (408), based on determining the inconsistency between the first information received from the first vehicle (212, 214, 216, 314, 316) and the image, video, or real-time feed of the environment (210, 310), the first vehicle (212, 214, 216, 314, 316) as a source of erroneous data; and
based on determining the inconsistency between the first information received from the first vehicle (212, 214, 216, 314, 316) and the image, video, or real-time feed of the environment (210, 310):
identify a type of the information for which the inconsistency has been identified,
filter out subsequent data of the identified type from the first vehicle (212, 214, 216, 314, 316), and
continue to receive and use subsequent data that is not of the identified type from the first vehicle (212, 214, 216, 314, 316).

8. The system (100, 200) of claim 7, wherein the system is further configured to:
determine, based on determining the inconsistency between the first information received from the first vehicle (212, 214, 216, 314, 316) and the image, video, or real-time feed of the environment (210, 310), that the first vehicle (212, 214, 216, 314, 316) is providing false information to the smart infrastructure device (204, 206, 208).

9. The system (100, 200) of claim 7 or 8, wherein the system is further configured to:
determine, based on determining the inconsistency between the first information received from the first vehicle (212, 214, 216, 314, 316) and the image, video, or real-time feed of the environment (210, 310), that the first vehicle (212, 214, 216, 314, 316) has a malfunctioning device.

10. The system (100, 200) of claim 9, wherein the system is further configured to:
send, based on determining that the first vehicle (212, 214, 216, 314, 316) has a malfunctioning device, an indication of the malfunctioning device to the first vehicle (212, 214, 216, 314, 316) or to a third party device.

11. The system (100, 200) of any of claims 7 to 10, wherein the system is further configured to:
send, by the smart infrastructure device (204, 206, 208), an indication of the inconsistency to one or more other vehicles.

12. The system (100, 200) of any of claims 7 to 11, wherein the first information comprises at least one of: a velocity of the first vehicle (212, 214, 216, 314, 316), a direction of the first vehicle (212, 214, 216, 314, 316), or a location of the first vehicle (212, 214, 216, 314, 316).

13. A computer readable medium including computer-executable instructions stored thereon, which when executed by one or more processors (502), cause the one or more processors (502) to perform operations of:
receiving (402), by a smart infrastructure device (204, 206, 208) of a smart infrastructure system (102, 102b, 202, 302) and from a first connected device that is located externally from the smart infrastructure device (204, 206, 208), first information associated with the first connected device;
receiving (404) an image, video, or real-time feed of an environment (210, 310) of the smart infrastructure device (204, 206, 208), the environment (210, 310) including the first connected device;
determining (406) an inconsistency between the first information received from the first connected device and the image, video, or real-time feed of the environment (210, 310); and
flagging (408), based on determining the inconsistency between the first information received from the first connected device and the image, video, or real-time feed of the environment (210, 310), the first connected device as a source of erroneous data; and
based on determining the inconsistency between the first information received from the first connected device and the image, video, or real-time feed of the environment (210, 310) by the smart infrastructure system (102, 102b, 202, 302):
identifying a type of the information for which the inconsistency has been identified,
filtering out subsequent data of the identified type from the first connected device, and
continuing to receive and use subsequent data that is not of the identified type from the first connected device.

14. The computer readable medium of claim 13, wherein the computer-executable instructions further cause the one or more processors (502) to perform operations of:
determining, based on determining the inconsistency between the first information received from the first connected device and the image, video, or real-time feed of the environment (210, 310), that the first connected device is providing false information to the smart infrastructure device (204, 206, 208).

## Patentansprüche

1. Ein Verfahren (400), das Folgendes umfasst:
· das Empfangen (402), durch ein intelligentes Infrastrukturgerät (204, 206, 208) eines intelligenten Infrastruktursystems (102, 102b, 202, 302) und von einem ersten Fahrzeug (212, 214, 216, 314, 316), das sich außerhalb des intelligenten Infrastrukturgeräts (204, 206, 208) befindet, einer ersten Information, die mit dem ersten Fahrzeug (212, 214, 216, 314, 316) assoziiert ist,
· das Empfangen (404) eines Bilds, Videos oder Echtzeit-Feeds einer Umgebung (210, 310) des intelligenten Infrastrukturgeräts (204, 206, 208), wobei die Umgebung (210, 310) das erste Fahrzeug (212, 214, 216, 314, 316) einschließt;
· das Feststellen (406) eines Widerspruchs zwischen der vom ersten Fahrzeug (212, 214, 216, 314, 316) empfangenen ersten Information und dem Bild, Video oder Echtzeit-Feed der Umgebung (210, 310);
· das Kennzeichnen (408), basierend auf dem Feststellen des Widerspruchs zwischen der vom ersten Fahrzeug (212, 214, 216, 314, 316) empfangenen ersten Information und dem Bild, Video oder Echtzeit-Feed der Umgebung (210, 310), des ersten Fahrzeugs (212, 214, 216, 314, 316) als Quelle fehlerhafter Daten; und
· basierend auf dem Feststellen des Widerspruchs zwischen der vom ersten Fahrzeug (212, 214, 216, 314, 316) empfangenen ersten Information und dem Bild, Video oder Echtzeit-Feed der Umgebung (210, 310), durch das intelligente Infrastruktursystem (102, 102b, 202, 302)
· das Identifizieren eines Typs der Information, für den der Widerspruch festgestellt wurde,
· das Herausfiltern nachfolgender Daten des identifizierten Typs aus dem ersten Fahrzeug (212, 214, 216, 314, 316), und
· das fortwährende Empfangen und Verwenden nachfolgender Daten, die nicht vom identifizierten Typ sind, aus dem ersten Fahrzeug (212, 214, 216, 314, 316).

2. Das Verfahren (400) nach Anspruch 1, das ferner Folgendes umfasst:
das Feststellen, basierend auf dem Feststellen des Widerspruchs zwischen der vom ersten Fahrzeug (212, 214, 216, 314, 316) empfangenen ersten Information und dem Bild, Video oder Echtzeit-Feed der Umgebung (210, 310), dass das erste Fahrzeug (212, 214, 216, 314, 316) falsche Informationen an das intelligente Infrastrukturgerät (204, 206, 208) liefert.

3. Das Verfahren (400) nach Anspruch 1 oder 2, das ferner Folgendes umfasst:
das Feststellen, basierend auf dem Feststellen des Widerspruchs zwischen der vom ersten Fahrzeug (212, 214, 216, 314, 316) empfangenen ersten Information und dem Bild, Video oder Echtzeit-Feed der Umgebung (210, 310), dass das erste Fahrzeug (212, 214, 216, 314, 316) ein fehlerhaftes Gerät aufweist.

4. Das Verfahren (400) nach Anspruch 3, das ferner Folgendes umfasst:
das Senden, basierend auf dem Feststellen, dass das erste Fahrzeug (212, 214, 216, 314, 316) ein fehlerhaftes Gerät aufweist, einer Angabe des fehlerhaften Geräts an das erste Fahrzeug (212, 214, 216, 314, 316) oder an ein Drittgerät.

5. Das Verfahren (400) nach einem der vorstehenden Ansprüche, das ferner Folgendes umfasst:
das Senden, durch das intelligente Infrastrukturgerät (204, 206, 208), einer Angabe des Widerspruchs an ein oder mehrere andere Fahrzeuge.

6. Das Verfahren (400) nach einem der vorstehenden Ansprüche, wobei die erste Information mindestens einen der folgenden Inhalte umfasst:
· eine Geschwindigkeit des ersten Fahrzeugs (212, 214, 216, 314, 316),
· eine Richtung des ersten Fahrzeugs (212, 214, 216, 314, 316) oder
· eine Position des ersten Fahrzeugs (212, 214, 216, 314, 316).

7. Ein System (100, 200), das ein intelligentes Infrastrukturgerät (204, 206, 208) und ein intelligentes Infrastruktursystem umfasst, wobei das System konfiguriert ist zu Folgendem:
· dem Empfangen (402), durch das intelligente Infrastrukturgerät (204, 206, 208) des intelligenten Infrastruktursystems (102, 102b, 202, 302) und von einem ersten Fahrzeug (212, 214, 216, 314, 316), das sich außerhalb des intelligenten Infrastrukturgeräts (204, 206, 208) befindet, einer ersten Information, die mit dem ersten Fahrzeug (212, 214, 216, 314, 316) assoziiert ist;
· dem Empfangen (404) eines Bilds, Videos oder Echtzeit-Feeds einer Umgebung (210, 310) des intelligenten Infrastrukturgeräts (204, 206, 208), wobei die Umgebung (210, 310) das erste Fahrzeug (212, 214, 216, 314, 316) einschließt;
· dem Feststellen (406) eines Widerspruchs zwischen der vom ersten Fahrzeug (212, 214, 216, 314, 316) empfangenen ersten Information und dem Bild, Video oder Echtzeit-Feed der Umgebung (210, 310);
· dem Kennzeichnen (408), basierend auf dem Feststellen des Widerspruchs zwischen der vom ersten Fahrzeug (212, 214, 216, 314, 316) empfangenen ersten Information und dem Bild, Video oder Echtzeit-Feed der Umgebung (210, 310), des ersten Fahrzeugs (212, 214, 216, 314, 316) als Quelle fehlerhafter Daten; und
· basierend auf dem Feststellen des Widerspruchs zwischen der vom ersten Fahrzeug (212, 214, 216, 314, 316) empfangenen ersten Information:
· das Identifizieren eines Typs der Information, für den der Widerspruch identifiziert wurde,
· das Herausfiltern nachfolgender Daten des identifizierten Typs aus dem ersten Fahrzeug (212, 214, 216, 314, 316), und
· das fortwährende Empfangen und Verwenden nachfolgender Daten, die nicht vom identifizierten Typ sind, aus dem ersten Fahrzeug (212, 214, 216, 314, 316).

8. Das System (100, 200) nach Anspruch 7, wobei das System ferner konfiguriert ist zu Folgendem:
dem Feststellen, basierend auf dem Feststellen des Widerspruchs zwischen der vom ersten Fahrzeug (212, 214, 216, 314, 316) empfangenen ersten Information und dem Bild, Video oder Echtzeit-Feed der Umgebung (210, 310), dass das erste Fahrzeug (212, 214, 216, 314, 316) falsche Informationen an das intelligente Infrastrukturgerät (204, 206, 208) liefert.

9. Das System (100, 200) nach Anspruch 7 oder 8, wobei das System ferner konfiguriert ist zu Folgendem:
dem Feststellen, basierend auf dem Feststellen des Widerspruchs zwischen der vom ersten Fahrzeug (212, 214, 216, 314, 316) empfangenen ersten Information und dem Bild, Video oder Echtzeit-Feed der Umgebung (210, 310), dass das erste Fahrzeug (212, 214, 216, 314, 316) ein fehlerhaftes Gerät aufweist.

10. Das System (100, 200) nach Anspruch 9, wobei das System ferner konfiguriert ist zu Folgendem:
dem Senden, basierend auf dem Feststellen, dass das erste Fahrzeug (212, 214, 216, 314, 316) ein fehlerhaftes Gerät aufweist, einer Angabe des fehlerhaften Geräts an das erste Fahrzeug (212, 214, 216, 314, 316) oder an ein Drittgerät.

11. Das System (100, 200) nach einem der Ansprüche 7 bis 10, wobei das System ferner konfiguriert ist zu Folgendem:
dem Senden, durch das intelligente Infrastrukturgerät (204, 206, 208), einer Angabe des Widerspruchs an ein oder mehrere andere Fahrzeuge.

12. Das System (100, 200) nach einem der Ansprüche 7 bis 11, wobei die erste Information mindestens einen der folgenden Inhalte umfasst:
· eine Geschwindigkeit des ersten Fahrzeugs (212, 214, 216, 314, 316),
· eine Richtung des ersten Fahrzeugs (212, 214, 216, 314, 316) oder
· eine Position des ersten Fahrzeugs (212, 214, 216, 314, 316).

13. Ein computerlesbares Medium, das darauf gespeicherte computerausführbare Anweisungen umfasst, die bei Ausführung durch einen oder mehrere Prozessoren (502) veranlassen, dass der eine oder die mehreren Prozessoren (502) folgende Operationen ausführen:
· das Empfangen (402), durch ein intelligentes Infrastrukturgerät (204, 206, 208) eines intelligenten Infrastruktursystems (102, 102b, 202, 302) und von einem ersten verbundenen Gerät, das sich außerhalb des intelligenten Infrastrukturgeräts (204, 206, 208) befindet, einer ersten Information, die mit dem ersten verbundenen Gerät assoziiert ist;
· das Empfangen (404) eines Bilds, Videos oder Echtzeit-Feeds einer Umgebung (210, 310) des intelligenten Infrastrukturgeräts (204, 206, 208), wobei die Umgebung (210, 310) das erste verbundene Gerät einschließt;
· das Feststellen (406) eines Widerspruchs zwischen der vom ersten verbundenen Gerät empfangenen ersten Information und dem Bild, Video oder Echtzeit-Feed der Umgebung (210, 310); und
· das Kennzeichnen (408),
· basierend auf dem Feststellen des Widerspruchs zwischen der vom ersten verbundenen Gerät empfangenen ersten Information und dem Bild, Video oder Echtzeit-Feed der Umgebung (210, 310), des ersten verbundenen Geräts als Quelle fehlerhafter Daten; und
· basierend auf dem Feststellen des Widerspruchs zwischen der vom ersten verbundenen Gerät empfangenen ersten Information und dem Bild, Video oder Echtzeit-Feed der Umgebung (210, 310) durch das intelligente Infrastruktursystem (102, 102b, 202, 302):
· das Identifizieren eines Typs der Information, für den der Widerspruch identifiziert wurde,
· das Herausfiltern nachfolgender Daten des identifizierten Typs aus dem ersten verbundenen Gerät, und
· das fortwährende Empfangen und Verwenden nachfolgender Daten, die nicht vom identifizierten Typ sind, aus dem ersten verbundenen Gerät.

14. Das computerlesbare Medium nach Anspruch 13, wobei die computerausführbaren Anweisungen ferner veranlassen, dass der eine oder die mehreren Prozessoren (502) Folgendes ausführen:
· das Feststellen, basierend auf dem Feststellen des Widerspruchs zwischen der vom ersten verbundenen Gerät empfangenen ersten Information und dem Bild, Video oder Echtzeit-Feed der Umgebung (210, 310), dass das erste verbundene Gerät falsche Informationen an das intelligente Infrastrukturgerät (204, 206, 208) liefert.

## Revendications

1. Procédé (400), comprenant :
la réception (402), par un dispositif d'infrastructure intelligente (204, 206, 208) d'un système d'infrastructure intelligente (102, 102b, 202, 302), et en provenance d'un premier véhicule (212, 214, 216, 314, 316) qui est situé à l'extérieur du dispositif d'infrastructure intelligente (204, 206, 208), de premières informations associées au premier véhicule (212, 214, 216, 314, 316) ;
la réception (404) d'une image, d'une vidéo ou d'un flux en temps réel d'un environnement (210, 310) du dispositif d'infrastructure intelligente (204, 206, 208), l'environnement (210, 310) comprenant le premier véhicule (212, 214, 216, 314, 316);
la détermination (406) d'une incohérence entre les premières informations reçues en provenance du premier véhicule (212, 214, 216, 314, 316) et l'image, la vidéo ou le flux en temps réel de l'environnement (210, 310) ;
le signalement (408), sur la base de la détermination de l'incohérence entre les premières informations reçues en provenance du premier véhicule (212, 214, 216, 314, 316) et l'image, la vidéo ou le flux en temps réel de l'environnement (210, 310), du premier véhicule (212, 214, 216, 314, 316) en tant que source de données erronées ; et
sur la base de la détermination de l'incohérence entre les premières informations reçues en provenance du premier véhicule (212, 214, 216, 314, 316) et l'image, la vidéo ou le flux en temps réel de l'environnement (210, 310), par le système d'infrastructure intelligente (102, 102b, 202, 302) :
l'identification d'un type des informations pour lesquelles l'incohérence a été déterminée,
le filtrage de données subséquentes du type identifié provenant du premier véhicule (212, 214, 216, 314, 316), et
la poursuite de la réception et de l'utilisation de données subséquentes qui ne sont pas du type identifié provenant du premier véhicule (212, 214, 216, 314, 316).

2. Procédé (400) de la revendication 1, comprenant en outre :
la détermination, sur la base de la détermination de l'incohérence entre les premières informations reçues en provenance du premier véhicule (212, 214, 216, 314, 316) et l'image, la vidéo ou le flux en temps réel de l'environnement (210, 310), que le premier véhicule (212, 214, 216, 314, 316) fournit de fausses informations au dispositif d'infrastructure intelligente (204, 206, 208).

3. Procédé (400) de la revendication 1 ou 2, comprenant en outre :
la détermination, sur la base de la détermination de l'incohérence entre les premières informations reçues en provenance du premier véhicule (212, 214, 216, 314, 316) et l'image, la vidéo ou le flux en temps réel de l'environnement (210, 310), que le premier véhicule (212, 214, 216, 314, 316) comporte un dispositif défectueux.

4. Procédé (400) de la revendication 3, comprenant en outre :
l'envoi, sur la base de la détermination que le premier véhicule (212, 214, 216, 314, 316) comporte un dispositif défectueux, d'une indication du dispositif défectueux au premier véhicule (212, 214, 216, 314, 316) ou à un dispositif tiers.

5. Procédé (400) de l'une quelconque des revendications précédentes, comprenant en outre :
l'envoi, par le dispositif d'infrastructure intelligente (204, 206, 208), d'une indication de l'incohérence à un ou plusieurs autres véhicules.

6. Procédé (400) de l'une quelconque des revendications précédentes, dans lequel les premières informations comprennent au moins l'une des informations parmi : une vitesse du premier véhicule (212, 214, 216, 314, 316), une direction du premier véhicule (212, 214, 216, 314, 316) ou un emplacement du premier véhicule (212, 214, 216, 314, 316).

7. Système (100, 200) comprenant un dispositif d'infrastructure intelligente (204, 206, 208) et un système d'infrastructure intelligente, le système étant configuré pour :
recevoir (402), par le dispositif d'infrastructure intelligente (204, 206, 208) du système d'infrastructure intelligente (102, 102b, 202, 302) et en provenance d'un premier véhicule (212, 214, 216, 314, 316) qui est situé à l'extérieur du dispositif d'infrastructure intelligente (204, 206, 208), des premières informations associées au premier véhicule (212, 214, 216, 314, 316);
recevoir (404) une image, une vidéo ou un flux en temps réel d'un environnement (210, 310) du dispositif d'infrastructure intelligente (204, 206, 208), l'environnement (210, 310) comprenant le premier véhicule (212, 214, 216, 314, 316) ;
déterminer (406) une incohérence entre les premières informations reçues en provenance du premier véhicule (212, 214, 216, 314, 316) et l'image, la vidéo ou le flux en temps réel de l'environnement (210, 310) ;
signaler (408), sur la base de la détermination de l'incohérence entre les premières informations reçues en provenance du premier véhicule (212, 214, 216, 314, 316) et l'image, la vidéo ou le flux en temps réel de l'environnement (210, 310), le premier véhicule (212, 214, 216, 314, 316) en tant que source de données erronées ; et
sur la base de la détermination de l'incohérence entre les premières informations reçues en provenance du premier véhicule (212, 214, 216, 314, 316) et l'image, la vidéo ou le flux en temps réel de l'environnement (210, 310) :
identifier un type des informations pour lesquelles l'incohérence a été déterminée,
filtrer des données subséquentes du type identifié provenant du premier véhicule (212, 214, 216, 314, 316), et
continuer à recevoir et à utiliser des données subséquentes qui ne sont pas du type identifié provenant du premier véhicule (212, 214, 216, 314, 316).

8. Système (100, 200) de la revendication 7, dans lequel le système est en outre configuré pour :
déterminer, sur la base de la détermination de l'incohérence entre les premières informations reçues en provenance du premier véhicule (212, 214, 216, 314, 316) et l'image, la vidéo ou le flux en temps réel de l'environnement (210, 310), que le premier véhicule (212, 214, 216, 314, 316) fournit de fausses informations au dispositif d'infrastructure intelligente (204, 206, 208).

9. Système (100, 200) de la revendication 7 ou 8, dans lequel le système est en outre configuré pour :
déterminer, sur la base de la détermination de l'incohérence entre les premières informations reçues en provenance du premier véhicule (212, 214, 216, 314, 316) et l'image, la vidéo ou le flux en temps réel de l'environnement (210, 310), que le premier véhicule (212, 214, 216, 314, 316) comporte un dispositif défectueux.

10. Système (100, 200) de la revendication 9, dans lequel le système est en outre configuré pour :
envoyer, sur la base de la détermination que le premier véhicule (212, 214, 216, 314, 316) comporte un dispositif défectueux, une indication du dispositif défectueux au premier véhicule (212, 214, 216, 314, 316) ou à un dispositif tiers.

11. Système (100, 200) de l'une quelconque des revendications 7 à 10, dans lequel le système est en outre configuré pour :
envoyer, par le dispositif d'infrastructure intelligente (204, 206, 208), une indication de l'incohérence à un ou plusieurs autres véhicules.

12. Système (100, 200) de l'une quelconque des revendications 7 à 11, dans lequel les premières informations comprennent au moins l'une des informations parmi : une vitesse du premier véhicule (212, 214, 216, 314, 316), une direction du premier véhicule (212, 214, 216, 314, 316) ou un emplacement du premier véhicule (212, 214, 216, 314, 316).

13. Support lisible par ordinateur comprenant des instructions exécutables par ordinateur qui, lorsqu'elles sont exécutées par un ou plusieurs processeurs (502), amènent le ou les processeurs (502) à effectuer les opérations consistant à :
recevoir (402), par un dispositif d'infrastructure intelligente (204, 206, 208) d'un système d'infrastructure intelligente (102, 102b, 202, 302), et en provenance d'un premier dispositif connecté qui est situé à l'extérieur du dispositif d'infrastructure intelligente (204, 206, 208), des premières informations associées au premier dispositif connecté ;
recevoir (404) une image, une vidéo ou un flux en temps réel d'un environnement (210, 310) du dispositif d'infrastructure intelligente (204, 206, 208), l'environnement (210, 310) comprenant le premier dispositif connecté ;
déterminer (406) une incohérence entre les premières informations reçues en provenance du premier dispositif connecté et l'image, la vidéo ou le flux en temps réel de l'environnement (210, 310) ; et
signaler (408), sur la base de la détermination de l'incohérence entre les premières informations reçues en provenance du premier dispositif connecté et l'image, la vidéo ou le flux en temps réel de l'environnement (210, 310), le premier dispositif connecté en tant que source de données erronées ; et
sur la base de la détermination de l'incohérence entre les premières informations reçues en provenance du premier dispositif connecté et l'image, la vidéo ou le flux en temps réel de l'environnement (210, 310), par le système d'infrastructure intelligente (102, 102b, 202, 302) :
identifier un type des informations pour lesquelles l'incohérence a été identifiée,
filtrer des données subséquentes du type identifié provenant du premier dispositif connecté, et
continuer à recevoir et à utiliser des données subséquentes qui ne sont pas du type identifié provenant du premier dispositif connecté.

14. Support lisible par ordinateur de la revendication 13, dans lequel les instructions exécutables par ordinateur amènent en outre le ou les processeurs (502) à effectuer l'opération consistant à :
déterminer, sur la base de la détermination de l'incohérence entre les premières informations reçues en provenance du premier dispositif connecté et l'image, la vidéo ou le flux en temps réel de l'environnement (210, 310), que le premier dispositif connecté fournit de fausses informations au dispositif d'infrastructure intelligente (204, 206, 208).
